# FASCICULE DE BREVET EUROPEEN

(11) **EP 1 949 783 B1**
(45) Date de publication et mention de la délivrance du brevet: **02.03.2011**
(21) Numéro de dépôt: 08358001.9
(22) Date de dépôt: 17.01.2008
(51) Int. Cl.: A01D 46/28

(54) **Ecaille démontable pour plancher articulé de réception équipant les machines de récolte de petits fruits**
Zerlegbare Platte für einen gelenkigen Aufnahmeboden für eine Maschine zum Ernten von kleinen Früchten
Dismountable plate for articulated reception floor for small fruit harvesters

(30) Priorité: 29.01.2007 FR 0700585
(43) Date de publication de la demande: 30.07.2008
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- EP-A- 0 511 125
- US-A- 3 449 895
- US-A- 3 690 054
- US-A- 5 647 194

## Description

La présente invention concerne une écaille démontable pour plancher articulé de réception des fruits détachés équipant certaines machines de récolte de petits fruits, telles que la plupart des machines à vendanger utilisées pour la récolte du raisin.

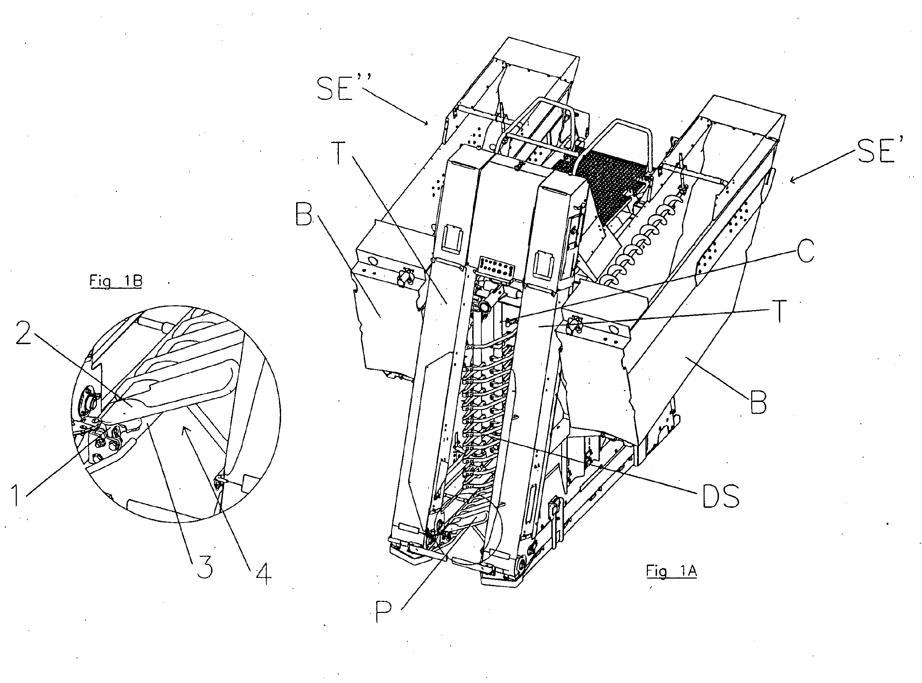

On connaît (figure 1) des machines de récolte de baies ou de petits fruits, en particulier des machines à vendanger, constituées de deux sous-ensembles SE', SE", assemblés rigidement à leur partie supérieure et entre lesquels se trouve ménagé un couloir C permettant leur déplacement de chaque côté d'un rang de ceps de vigne ou autres plantes, chevauché par les machines, chacun de ces sous-ensembles comprenant : - un système de détachement des fruits généralement constitué par un dispositif de secouage DS ; - un dispositif de réception des fruits détachés le plus souvent constitué par un plancher articulé P constitué de plaques ou écailles chevauchantes, inclinées et pivotantes ; - un dispositif de transport T de la vendange brute recueillie déversée par le plancher articulé ; - et, généralement, une benne B de réception de la récolte ou un dispositif de déchargement de celle-ci.

Le plancher articulé P de réception des fruits détachés par le dispositif de secouage de la machine est ainsi constitué par deux sous-ensembles composés, chacun, d'une pluralité d'écailles pivotantes disposées en succession, en recouvrement partiel les unes des autres, avec une orientation de sens contraire au sens d'avancement de ladite machine, en cours de travail. Le bord interne de la rangée d'écailles de l'un des sous-ensembles du plancher articulé, recouvre le bord interne de la rangée d'écailles de l'autre sous-ensemble, de sorte que la totalité de la récolte est recueillie sur ledit plancher articulé qui ne présente aucun passage entraînant la chute d'une partie de cette dernière sur le sol, y compris au passage des ceps ou des piquets de palissage lors duquel les écailles pivotent en enserrant lesdits ceps ou piquets.

Les écailles de chaque sous-ensemble de plancher articulé sont généralement réalisées en matière plastique et sont fixées sur une rampe métallique horizontale, par exemple constituée par un robuste profilé obtenu par pliage d'une tôle d'acier.

Compte tenu du fait qu'un volume plus ou moins important de baies ou petits fruits de certaines plantes, par exemple les grappes de nombreuses variétés de raisin, se développe en partie basse des plantes, le plancher articulé des machines de récolte se trouve positionné à une distance réduite du sol, généralement à une hauteur de l'ordre de 18 cm.

Il existe plusieurs type d'écailles utilisées pour la constitution des planchers articulés des machines de récolte du genre susmentionné.

Selon un premier type, les écailles sont moulées d'une seule pièce et comprennent une patte de fixation rattachée à l'écaille proprement dite par une portion de rattachement flexible très sollicitée en cours de travail.

Un inconvénient propre à ce type d'écailles découle de la nécessité de les réaliser dans une matière qui soit à la fois flexible et très résistante aux chocs et à l'usure. Cette nécessité conduit à réaliser l'écaille proprement dite avec une épaisseur importante ce qui influe défavorablement sur son coût, ce qui n'est pas négligeable si l'on considère que chaque sous-ensemble de plancher articulé est constitué de 30 à 40 écailles.

Selon un autre type (US-5.647.194), l'écaille proprement dite est fixée à une patte de fixation par l'intermédiaire d'un système de "silentbloc" ®.

Dans le document US-3.449.895, est décrite une écaille de réception de plancher articulé de machine de récolte constituée d'au moins trois parties essentielles : - un bras porteur pivotant ; - un disque récepteur rotatif relié audit bras pivotant par l'intermédiaire d'un dispositif d'articulation (lui-même constitué de trois éléments) ; et un ressort de rappel calé, au moyen de ses extrémités opposées, sur le bras pivotant et sur la rampe porteuse. Il s'agit d'un système complexe et coûteux.

Quel que soit le type d'écaille compris dans l'état de la technique exposé ci-dessus, lorsque le plancher articulé est constitué, les organes de fixation (vis et écrous ou autres) des écailles sur la rampe porteuse ou sur leurs pattes de fixation, se trouvent recouverts par la portion desdites écailles proche de ladite rampe, de sorte que ces organes de fixation ne sont pas accessibles à partir du dessus de la rangée d'écailles. Dans ces conditions, en cas de détérioration de l'une des écailles (résultant, par exemple, de la rupture de la portion flexible ou de l'endommagement du système de "silentcloc" ®, assurant le rattachement de l'écaille proprement dite à sa patte de fixation sur la rampe porteuse), son remplacement immédiat impératif par une nouvelle écaille, constitue une intervention extrêmement difficile et pénible. En effet, le réparateur doit s'allonger sur le sol pour avoir accès, à partir du dessous de la rampe d'écailles, aux organes de fixation de l'écaille défaillante à remplacer. La pénibilité d'une telle intervention peut être aggravée en cas de mauvais temps (pluie, vent) ou de sol boueux.

Un but de la présente invention est donc de permettre d'effectuer la dépose d'une écaille mise hors service et son remplacement rapide par une nouvelle écaille, sans peine excessive, à partir du dessus de la rangée d'écailles.

Selon l'invention, cet objectif est atteint grâce à une écaille réalisée en deux parties, à savoir : - une première partie d'ancrage et d'articulation comprenant une patte de fixation destinée à être fixée sur la rampe porteuse d'une rangée d'écailles et une patte flexible d'articulation et d'assemblage rattachée à ladite patte de fixation, et - une deuxième partie plane constituée par l'écaille proprement dite, lesdites première partie et deuxième partie étant pourvues de moyens complémentaires d'assemblage et de désassemblage rapides par emboîtement, ladite écaille étant remarquable en ce que lesdits moyens complémentaires d'assemblage et de désassemblage rapides comprennent un dispositif de verrouillage automatique en position d'assemblage, en fin de course du mouvement d'emboîtement, et en ce que l'écaille est munie d'un passage permettant d'agir sur le dispositif de verrouillage pour le déverrouiller, ce passage étant accessible à partir du dessus de ladite écaille.

Grâce à ces dispositions, la partie plane constituant l'écaille proprement dite est facilement et rapidement interchangeable, quelle que soit la position de l'écaille à remplacer sur le sous-ensemble de plancher articulé, et, lorsque celui-ci est complet, sans que la patte flexible d'articulation de l'écaille n'ait été préalablement démontée de la rampe.

Selon un mode d'exécution préféré, les moyens de montage interchangeable de la deuxième partie constituée par l'écaille proprement dite, sur la première partie de fixation et d'articulation, comprennent un dispositif d'assemblage par emboîtement de l'un des éléments de ce dispositif dans le second élément de ce dernier, et un loquet basculant solidaire de l'un desdits éléments et coopérant avec un épaulement dont est muni ledit second élément, de sorte à assurer automatiquement la solidarisation desdits éléments, en fin de course d'assemblage, un orifice étant prévu dans l'épaisseur de l'écaille, cet orifice permettant d'accéder au loquet basculant lorsque celui-ci se trouve en position de verrouillage afin d'autoriser son basculement et la désolidarisation des deux parties de l'écaille.

Selon une disposition avantageuse, les moyens d'assemblage séparable de la première partie et de la deuxième partie comprennent un bloc de fixation ou emboîture disposé en sous-face de l'écaille interchangeable et muni d'une fente verticale destinée à l'engagement d'une portion de la patte flexible d'articulation.

Selon une autre disposition avantageuse, le bord supérieur de la portion d'engagement de la patte flexible d'articulation est muni d'une platine d'appui orientée perpendiculairement à ladite patte flexible d'articulation, tandis qu'une fente est ménagée, entre la sous-face de l'écaille et le bloc de fixation, ou emboîture, pour l'engagement de ladite platine d'appui.

Selon une autre disposition avantageuse, le dispositif de verrouillage automatique comprend un loquet basculant rattaché, de préférence élastiquement, à l'une des faces latérales de la portion d'engagement de la patte flexible d'articulation, ce loquet basculant comportant un bec coopérant avec un épaulement de retenue dont est pourvu le bord inférieur de l'une des parois délimitant la fente de réception de la portion d'engagement de ladite patte flexible d'articulation et étant accessible à partir d'un trou ménagé dans l'épaisseur de l'écaille.

Grâce aux dispositions ci-dessus, on obtient un montage solide de l'écaille proprement dite sur la partie de fixation et d'articulation, ladite écaille se trouvant en effet fermement immobilisée, par rapport à ladite partie, dans toutes les directions possibles (3 rotations et 3 translations).

Les buts, caractéristiques et avantages ci-dessus, et d'autres encore, ressortiront mieux de la description qui suit et des dessins annexés dans lesquels :
La figure 1A est une vue en perspective d'un exemple de réalisation de tête de récolte de machine à vendanger à laquelle peut être appliquée l'invention.
La figure 1B est une vue de détail, à plus grande échelle, de la figure 1A.

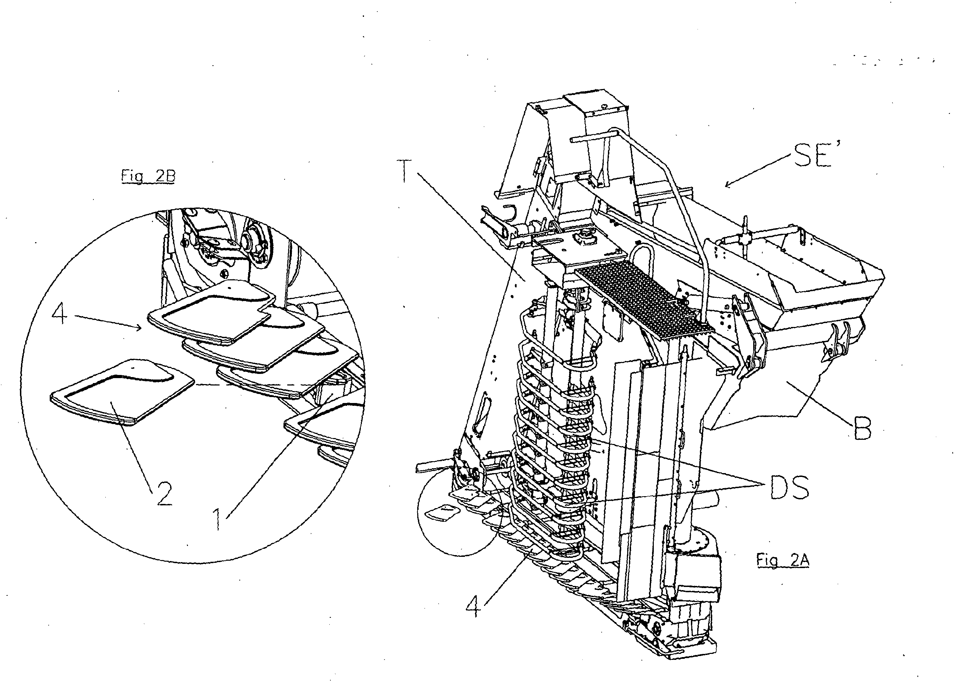

La figure 2A est une vue en perspective de l'un des sous-ensembles de cette tête de récolte.
La figure 2B est une vue de détail, à plus grande échelle, de la figure 2A.

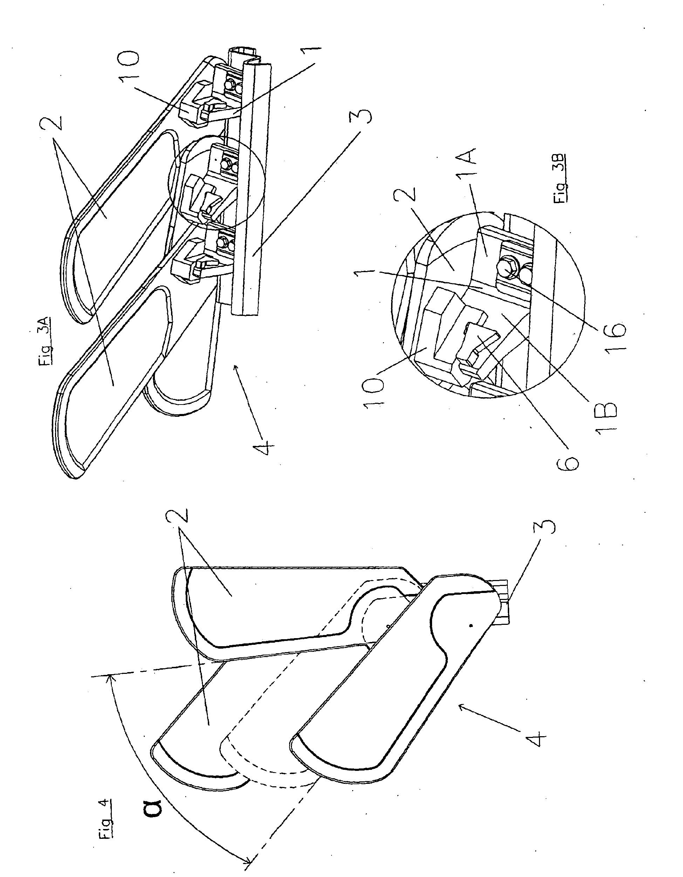

La figure 3A est une vue de dessus, en perspective, d'une portion de plancher articulé constitué d'écailles selon l'invention.
La figure 3B est une vue de détail, à plus grande échelle de la figure 3A.
La figure 4 est une vue de dessous, en perspective, de la figure 3, cette figure et la précédente illustrent le pivotement possible d'une écaille suivant un angle α grâce à la charnière selon l'invention.
La figure 5 est une vue éclatée de dessus, en perspective, d'une écaille bipartie selon l'invention.
La figure 6 est une vue éclatée de dessous, en perspective, de la figure 5.

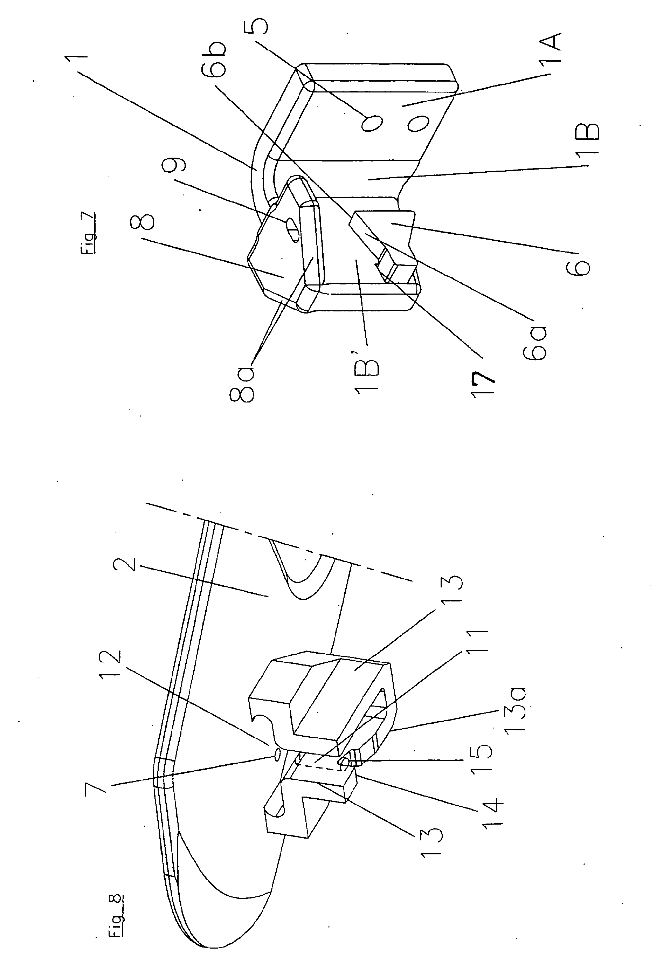

La figure 7 est une vue de dessus, en perspective, de la patte d'ancrage et d'articulation de cette écaille.
La figure 8 est une vue de dessous partielle, en perspective, illustrant plus spécialement le bloc de fixation ou emboîture dont est munie en sous-face, ladite écaille.
La figure 9 est une vue partielle de dessus, en perspective, montrant le pivotement de l'écaille précédant l'écaille endommagée à remplacer, parmi une rangée d'écailles, afin de découvrir l'orifice donnant accès au loquet basculant de verrouillage/déverrouillage de cette dernière, à partir du dessus de la rangée d'écailles, de sorte à permettre la libération et le retrait de ladite écaille endommagée.
La figure 10 est une vue de dessous, en perspective, de la figure 9.
Les figures 11A, 11B, 12A, 12B, 13A, 13B, 14 sont des vues en perspective illustrant la désolidarisation des deux parties d'une écaille, au moyen d'un simple tournevis, afin de procéder au remplacement de la partie constituant la partie réceptrice de ladite écaille.

On se reporte auxdits dessins pour décrire un exemple de réalisation intéressant, bien que nullement limitatif, de l'écaille démontable selon l'invention.

Dans la description qui suit, on utilise des mots tels que "supérieur", "inférieur", "vertical", "horizontale", "incliné", ..., en considérant une position théorique d'une machine de récolte équipée d'un plancher articulé, en cours de travail, ces termes n'ayant cependant aucun caractère limitatif.

L'écaille démontable selon l'invention est constituée de seulement deux éléments ou parties distinctes 1 et 2 assemblées de manière séparable, soit une première partie 1 destinée à être fixée sur une rampe horizontale porteuse 3 supportant l'une des rangées 4 d'écailles du plancher articulé P, et une deuxième partie 2 constituée par l'écaille proprement dite, destinée à être positionnée, de manière interchangeable, sur ladite première partie.

La première partie 1 d'ancrage et d'articulation ou charnière comprend, d'une part, une patte de fixation 1A pourvue de trous 5 pour le passage des tiges des organes d'assemblage 16 (par exemple boulons) permettant son montage fixe sur la rampe porteuse 3, et, d'autre part, une patte flexible 1 B d'articulation et d'assemblage rattachée à ladite patte de fixation 1A en formant vue de dessus, un angle avec celle-ci, par exemple un angle de 90° ou de l'ordre de 90°. De manière préférée, la première partie 1 d'ancrage et de fixation est formée d'une seule pièce, en tout matériau flexible convenable tel que élastomères thermoplastiques (TPE), de préférence en polyesters élastomères thermoplastiques, par exemple en "Hytrel" (Marque déposée).

D'autre part, la deuxième partie 2 constituant l'écaille proprement dite est réalisée dans un matériau différent présentant de bonnes qualités de résistance aux chocs et à l'usure, tel que polyamide et, plus précisément en "Bergamid 66-A70" (Marque déposée), ce qui permet de réaliser ladite deuxième partie 2, avec une épaisseur réduite (de l'ordre de 10 mm dans un bord destiné à entrer en contact avec les ceps et les piquets et sensiblement plus mince dans sa surface restante).

Les première et deuxième parties 1 et 2 sont pourvues de moyens complémentaires d'assemblage et de désassemblage rapides comprenant un dispositif de verrouillage automatique en position d'accouplement et accessible à partir du dessus de l'écaille et dont un mode d'exécution très avantageux est décrit dans la suite du présent exposé.

Selon ce mode d'exécution, les moyens de montage interchangeable de l'écaille 2 sur la partie fixe d'ancrage et d'articulation 1, comprennent un dispositif d'assemblage par emboîtement de l'un des éléments de ce dispositif dans le second élément de ce dernier, et un loquet basculant 6 solidaire de l'un des éléments et coopérant avec un épaulement ou un cran dont est muni ledit second élément, un orifice 7 étant prévu dans l'épaisseur de l'écaille, cet orifice 7 permettant d'accéder au loquet basculant lorsque celui-ci se trouve en position de verrouillage.

De manière préférée, le loquet basculant 6 est porté par l'une des faces latérales d'une portion d'engagement 1 B' de la patte flexible d'articulation 1 B de la partie d'ancrage et de fixation 1 de l'écaille 2. Il est avantageusement moulé d'une seule pièce avec ladite portion d'engagement et rattaché élastiquement à cette dernière. Il comporte un bord supérieur penté 6a et un bec de verrouillage 6b.

Le bord supérieur de la portion d'assemblage 1 B' est muni d'une platine d'appui 8 orientée perpendiculairement à ladite portion d'assemblage qui présente, de la sorte, une section en T. Dans l'un des côtés de la platine d'appui 8, est exécuté un orifice 9 de forme oblongue situé au-dessus et à l'aplomb de la partie active basculante du loquet 6. Pour faciliter l'engagement de la portion d'assemblage 1 B' dans les fentes de la pièce d'emboîture équipant la sous-face de l'écaille 2, l'extrémité libre de la platine d'appui 8 peut comporter des bords 8a, biseautés.

Les moyens d'assemblage séparables de la première partie 1 et de la deuxième partie 2 de l'écaille comprennent encore un bloc de fixation ou emboîture 10 disposée en sous-face de ladite deuxième partie constituée par l'écaille pivotante proprement dite. De manière préférée, cette emboîture est moulée d'une seule pièce avec l'écaille proprement dite 2, dans un matériau identique ou non à celui dans lequel est réalisée la partie d'ancrage et de fixation 1.

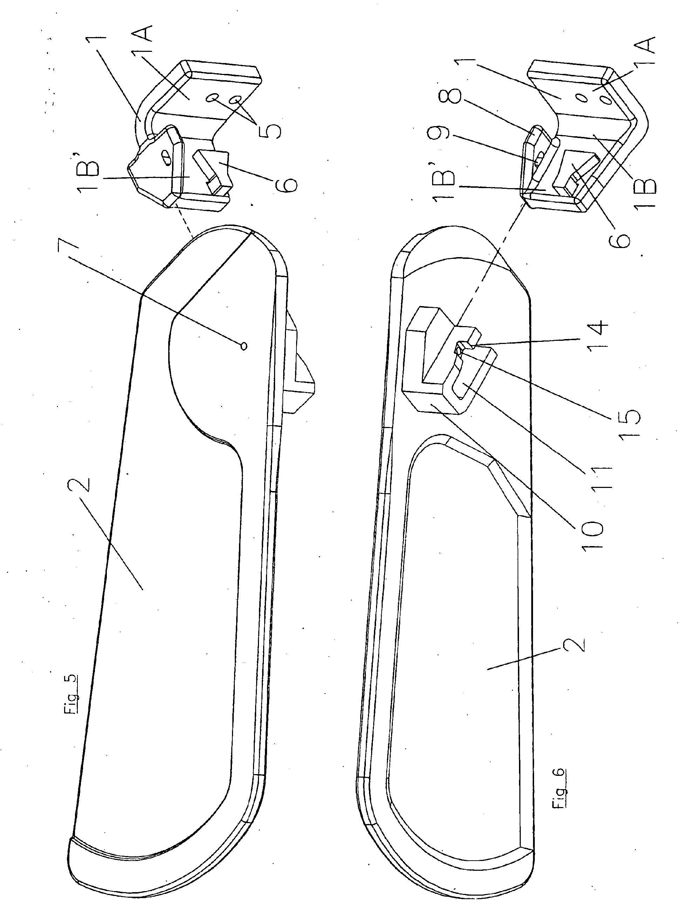

Le bloc de fixation ou emboîture 10 présente une fente verticale 11 s'ouvrant vers le bas et orientée obliquement par rapport au grand axe de l'écaille 2, comme le montre la figure 6. Cette fente présente une largeur permettant l'introduction et le coulissement de la portion d'accouplement 1 B' de la partie fixe d'ancrage et de fixation 1. D'autre part, une seconde fente 12 est ménagée, perpendiculairement à la fente 11, entre la sous-face de l'écaille et le bloc de fixation 10, pour l'introduction et le coulissement, sans jeu notable, de la platine d'appui 8 de ladite portion d'accouplement 1 B'.

Le bord inférieur 13a de l'une des parois 13 délimitant la fente 11 de réception de la portion d'accouplement 1 B' de la partie fixe 1, est pourvu d'un épaulement ou d'un cran 14 contre lequel vient automatiquement s'engager le bec de verrouillage 6b du loquet basculant 6 en fin de course de coulissement de ladite portion d'accouplement dans ladite fente.

En position d'accouplement des deux éléments constitutifs 1, 2 de l'écaille démontable, le trou 7 ménagé dans l'épaisseur de l'écaille proprement dite 2, communique avec l'orifice 9 traversant la platine d'appui 8 et qui, lui-même, communique avec un trou vertical 15 ménagé dans la paroi 13 et débouchant à l'arrière de l'épaulement ou cran 14. Dans cette position, les trous 7, 9 et 15 constituent un passage disposé à l'aplomb du loquet basculant 6, et donnant accès à ce dernier.

Le loquet basculant 6 présente un bord supérieur penté 6a et il est rattaché à l'un des côtés de la portion d'accouplement 1 B', au moyen d'une protubérance ou excroissance latérale 17 agissant par torsion élastique et constituant l'axe de basculement dudit loquet.

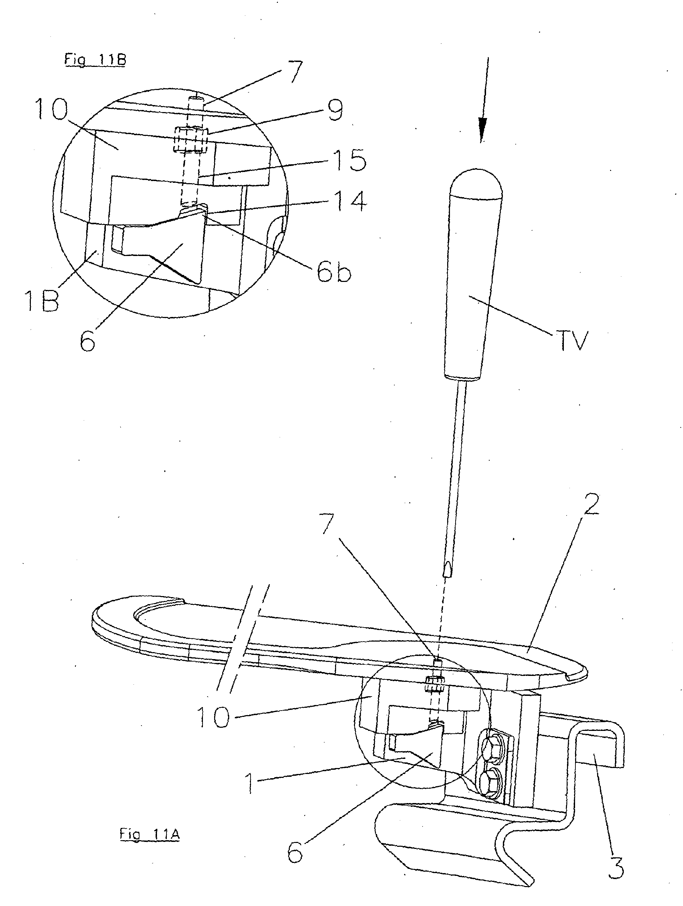

En position de fixation (figure 11), la portion d'accouplement 1B' et la platine d'appui 8 de la partie fixe 1 sont enfoncées dans les fentes 11 et 12, respectivement, de l'emboîture 10 de la partie interchangeable 2 ; le loquet 6 se trouve en butée contre l'épaulement ou cran 14 et les trous 7, 9 et 15 sont alignés.

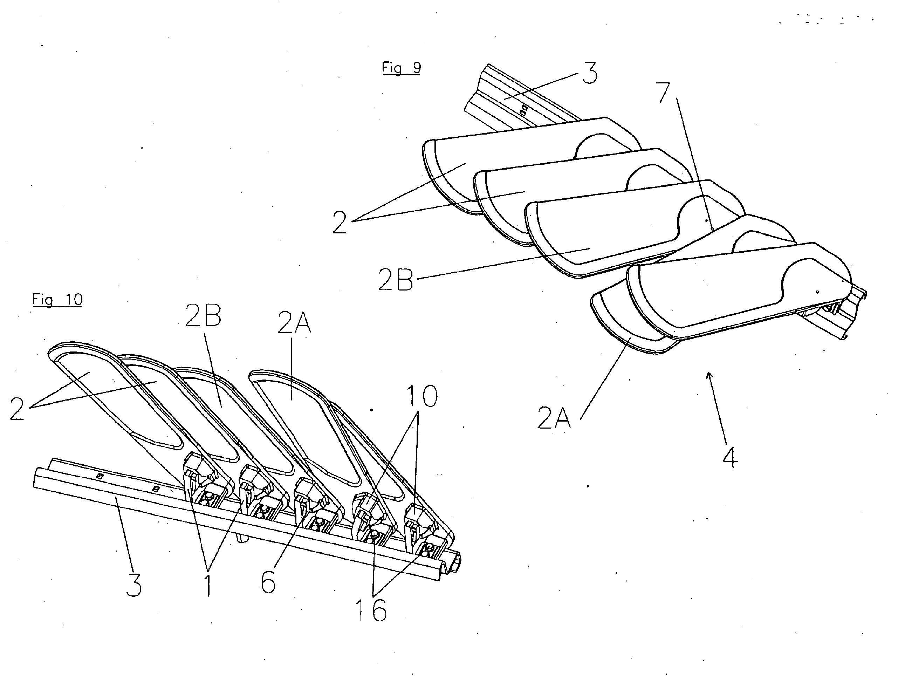

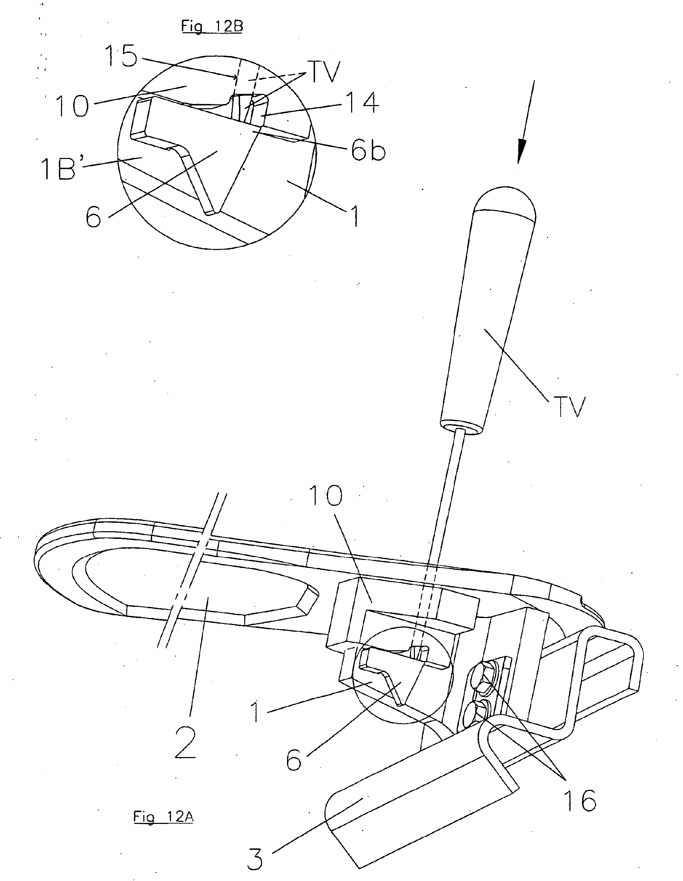

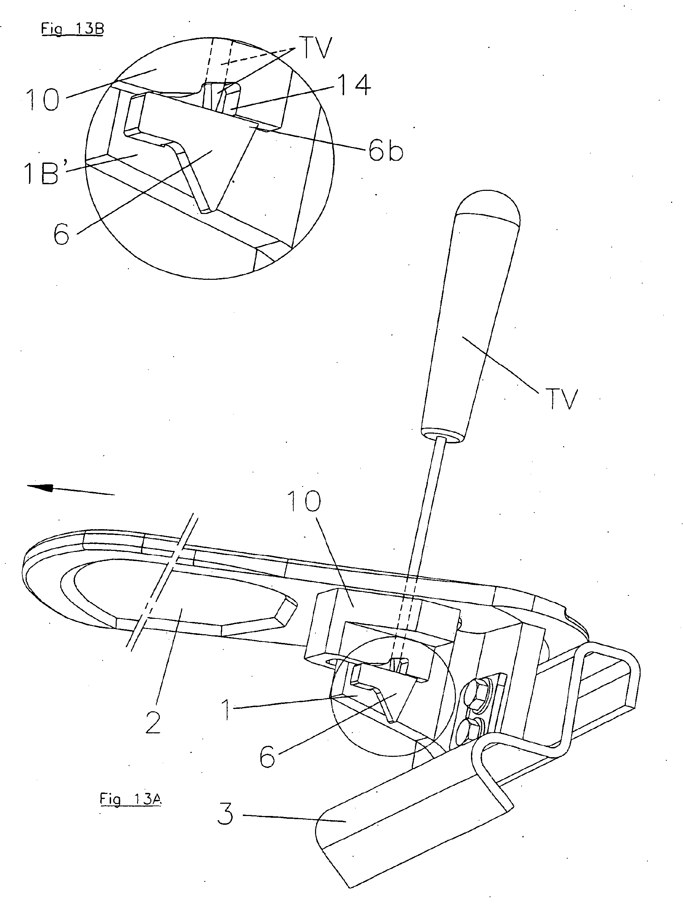

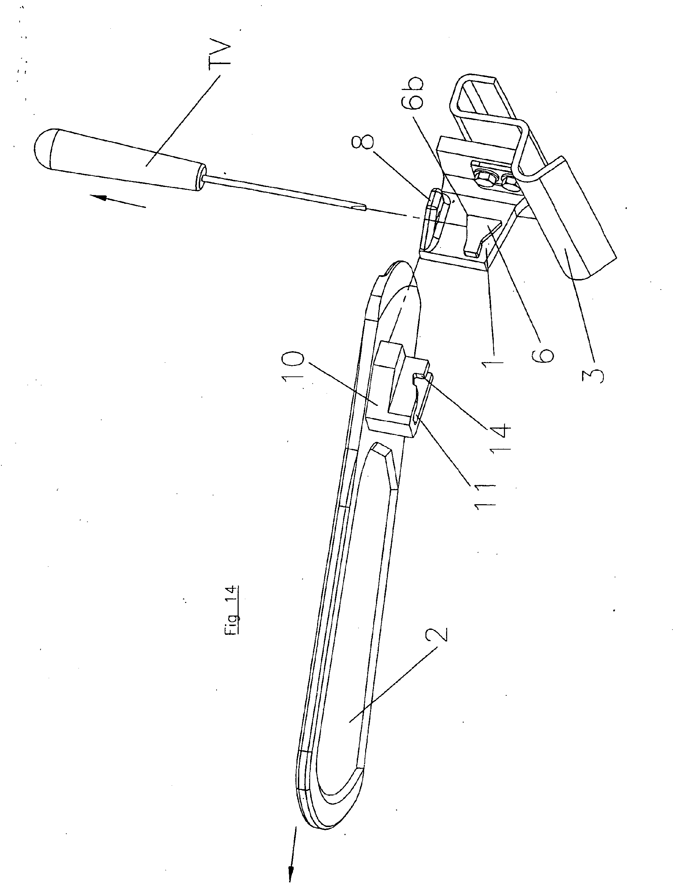

Pour procéder au remplacement d'une écaille endommagée 2B et plus précisément de la partie interchangeable de celle-ci, (figures 9 et 10), il suffit de pivoter l'écaille voisine chevauchante 2A, pour découvrir le trou 7 de ladite écaille à remplacer, d'introduire et d'enfoncer une tige telle que la tige d'un tournevis ordinaire TV dans le passage constitué par les trous alignés 7, 9 et 15, d'appuyer sur le loquet basculant 6 (figure 12) en tirant sur l'écaille pour le dégager du cran 14 (figure 13), ce qui est rendu possible par la forme oblongue du trou 9, puis après avoir retiré la tige TV, de déboîter l'écaille par un mouvement de translation parallèle au plan dans lequel se trouve celle-ci (figure 14).

La mise en place de la nouvelle partie interchangeable de l'écaille peut s'opérer encore plus simplement, de façon quasi instantanée, par simple coulissement de l'emboîture 10 sur la portion d'accouplement 1 B' de la partie fixe 1, le verrouillage des deux parties s'opérant automatiquement en fin de course d'emboîtement lors de laquelle le loquet basculant 6 glisse sur le bord de la paroi 13 et se trouve pivoté vers le bas grâce à son bord supérieur penté 6a en créant un couple de torsion sous l'effet duquel ledit loquet se trouve repoussé vers le haut, après le passage de l'épaulement ou cran 14 en verrouillant ainsi solidement la deuxième partie 2-10 de l'écaille sur la première partie fixe 1 de cette dernière.

## Revendications

1. Ecaille démontable pour plancher articulé de réception équipant les machines de récolte de petits fruits telles que, par exemple, les machines à vendanger, réalisée en deux éléments ou parties distinctes, à savoir une première partie d'ancrage et d'articulation (1) comportant une patte de fixation (1A) destinée à être fixée sur la rampe porteuse (3) d'une rangée d'écailles et une patte flexible (1 B) d'articulation et d'assemblage rattachée à ladite patte de fixation (1A), et, une deuxième partie plane (2) constituée par l'écaille proprement dite, lesdites première et deuxième parties (1, 2) étant pourvues de moyens complémentaires d'assemblage et de désassemblage rapides par emboîtement, **caractérisée en ce que** lesdits moyens complémentaires d'assemblage et de désassemblage rapides comprennent un dispositif de verrouillage automatique en position d'assemblage, en fin de course du mouvement d'emboîtement, et **en ce qu'**elle est munie d'un passage (7, 9, 15) permettant d'agir sur le dispositif d'assemblage des deux parties (1, 2) de celle-ci, pour le déverrouiller, ce passage étant accessible à partir du dessus de ladite écaille.

2. Ecaille démontable selon la revendication 1, **caractérisée en ce que** les moyens d'assemblage et de désassemblage rapides des première et deuxième parties (1, 2) de l'écaille, comprennent un dispositif d'emboîtement (1B'-10) de l'un (1B') des éléments de ce dispositif dans le deuxième éléments (10), et un loquet basculant (6) solidaire de l'un (1B') desdits éléments et coopérant avec un épaulement ou cran (14) dont est muni ledit second élément (10), de sorte à assurer automatiquement la solidarisation desdites première et deuxième parties (1, 2) en fin de course d'emboîtement, un trou (7) étant prévu dans l'épaisseur de l'écaille proprement dite (2), cet orifice permettant d'accéder au loquet basculant (6) lorsque celui-ci se trouve en position de verrouillage, afin d'autoriser son basculement et la désolidarisation desdites parties (1, 2) de l'écaille.

3. Ecaille démontable selon la revendication 2, **caractérisée en ce que** les moyens d'assemblage séparable de la première partie (1) et de la deuxième partie (2) de ladite écaille comprennent un bloc de fixation ou emboîture (10) disposée en sous-face de ladite deuxième partie (2) constituée par l'écaille proprement dite et munie d'une fente (11) destinée à l'engagement d'une portion (1B') de la patte flexible d'articulation (1B) de ladite première partie (1).

4. Ecaille démontable selon la revendication 3, **caractérisée en ce que** la fente (11) est orientée obliquement par rapport au grand axe de la deuxième partie (2) constituant l'écaille proprement dite.

5. Ecaille démontable suivant l'une quelconque des revendications 2 à 4, **caractérisée en ce que** le bord supérieur (17) de la portion d'assemblage (1B') de la patte flexible d'articulation (1B) est muni d'une platine d'appui (8) orientée perpendiculairement à ladite portion d'assemblage (1B'), tandis qu'une fente (12) est ménagée, entre la sous-face de l'écaille (2) et le bloc de fixation ou emboîture (10), pour l'engagement et le coulissement de ladite platine d'appui (8).

6. Ecaille démontable selon la revendication 5, **caractérisée en ce que** ladite platine d'appui (8) est munie d'un orifice oblong (9) situé au-dessus et à l'aplomb de la partie active basculante du loquet (6).

7. Ecaille démontable suivant l'une des revendications 5 ou 6, **caractérisée en ce que** l'extrémité avant de la platine d'appui (8) comporte des bords biseautés (8a).

8. Ecaille démontable selon l'une quelconque des revendications 2 à 7, **caractérisée en ce que** le dispositif de verrouillage automatique de la deuxième partie interchangeable (2) sur la première partie fixe (1) comprend un loquet basculant (6) rattaché à l'une des faces latérales de la portion d'assemblage (1 B') de la patte flexible d'articulation (1 B), ce loquet basculant (6) comportant un bec (6b) coopérant avec un épaulement ou cran de retenue (14) dont est pourvu le bord inférieur (13a) de l'une des parois (13) délimitant la fente (11) de réception de la portion d'assemblage (1 B') de ladite patte flexible d'articulation et d'assemblage (1B).

9. Ecaille démontable suivant l'une quelconque des revendications 2 à 8, **caractérisée en ce que** le loquet basculant (6) est assujetti à un moyen de rappel tendant à le replacer en position de verrouillage après pivotement en sens contraire, lors de l'emboîtement desdites première et deuxième parties (1,2).

10. Ecaille démontable selon la revendication 9, **caractérisée en ce que** le loquet basculant (6) est formé d'une seule pièce avec la partie d'ancrage et d'articulation (1) et se trouve rattaché élastiquement à l'une des faces latérales de la portion d'engagement (1B') de la patte flexible d'articulation (1 B), de sorte à générer un couple de torsion.

11. Ecaille démontable suivant l'une quelconque des revendications 2 à 10, **caractérisée en ce que** le loquet basculant (6) comporte un bord supérieur penté (6a) de sorte à entraîner l'effacement dudit loquet lors de son glissement sur le bord inférieur (13a) de l'une des parois (13) délimitant la fente (11).

12. Ecaille démontable selon les revendications 2, 6 et 8, **caractérisée en ce que** le passage donnant accès au loquet basculant (6) de verrouillage/déverrouillage comprend : un trou (7) ménagé dans l'épaisseur de l'écaille (2) proprement dite, un orifice oblong (9) que présente le plateau (8) d'appui de l'écaille proprement dite et un trou (15) ménagé dans l'une (13) des parois délimitant la fente (11) de réception de la portion d'accouplement (1B') de la partie fixe (1).

13. Ecaille démontable selon l'une quelconque des revendications 1 à 12, **caractérisée en ce que** la partie d'ancrage et d'articulation (1) est réalisée d'une seule pièce en élastomère thermoplastique, de préférence en polyester élastomère thermoplastique, tandis que la deuxième partie (2) constituant l'écaille proprement dite est réalisée en polyamide.

## Claims

1. A removable plate for an articulated receiving floor equipping small fruit harvesting machines such as for example grape harvesting machines, which is made in two separate parts or elements, namely a first anchoring and articulation part (1) comprising a fixing lug (1A) intended to be fixed to the carrier rail (3) for a row of plates and a flexible articulation and assembly lug (1B) attached to said fixing lug (1A), and a second flat part (2) formed by the actual plate, said first and second parts (1, 2) being provided with complementary quick assembly and disassembly means involving interengagement, **characterised in that** said complementary quick assembly and disassembly means comprise a device for automatic locking in the assembly position at the end of the interengagement movement travel, and that it is provided with a passage (7, 9, 15) making it possible to act on the device for assembly of the two parts (1, 2) thereof to unlock it, said passage being accessible from above said plate.

2. A removable plate according to claim 1 **characterised in that** the quick assembly and disassembly means for the first and second parts (1, 2) of the plate comprise a device (1B'-10) for interengagement of one (1B') of the elements of said device into the second element (10) and a pivotal latch (6) fixed with respect to one (1B') of said elements and co-operating with a shoulder or notch (14) with which said second element (10) is provided in such a way as to automatically lock said first and second parts (1, 2) together at the end of the interengagement travel, a hole (7) being provided in the thickness of the actual plate (2), said orifice making it possible to gain access to the pivotal latch (6) when it is in the locking position in order to permit pivotal movement thereof and unlocking of said parts (1, 2) of the plate.

3. A removable plate according to claim 2 **characterised in that** the separable assembly means for the first part (1) and the second part (2) of said plate comprise a fixing block or engagement portion (10) disposed at the underside of said second part (2) formed by the actual plate and provided with a slot (11) intended for the engagement of a portion (1B') of the flexible articulation lug (1B) of said first part (1).

4. A removable plate according to claim 3 **characterised in that** the slot (11) is oriented obliquely with respect to the long axis of the second part (2) constituting the actual plate.

5. A removable plate according to any one of claims 2 to 4 **characterised in that** the upper edge (17) of the assembly portion (1B') of the flexible articulation lug (1B) is provided with a support plate portion (8) oriented perpendicularly to said assembly portion (1B') while a slot (12) is provided between the underside of the plate (2) and the fixing block or engagement portion (10) for engagement and sliding movement of said support plate (8).

6. A removable plate according to claim 5 **characterised in that** said support plate portion (8) is provided with an oblong orifice (9) disposed above and in line with the active pivoting part of the latch (6).

7. A removable plate according to one of claims 5 and 6 **characterised in that** the front end of the support plate portion (8) comprises bevelled edges (8a).

8. A removable plate according to any one of claims 2 to 7 **characterised in that** the device for automatic locking of the second interchangeable part (2) on the first fixed part (1) comprises a pivoting latch (6) attached to one of the side faces of the assembly portion (1B') of the flexible articulation lug (1B), said pivoting latch (6) comprising a catch (6b) co-operating with a retaining notch or shoulder (14) provided at the lower edge (13a) of one of the walls (13) defining the slot (11) for receiving the assembly portion (1B') of said flexible articulation and assembly lug (1B).

9. A removable plate according to any one of claims 2 to 8 **characterised in that** the pivoting latch (6) is subjected to the action of a return means tending to restore it to the locking position after pivotal movement in the opposite direction upon interengagement of said first and second parts (1, 2).

10. A removable plate according to claim 9 **characterised in that** the pivoting latch (6) is formed in one piece with the anchoring and articulation part (1) and is elastically attached to one of the side faces of the engagement portion (1B') of the flexible articulation lug (1B) so as to generate a torsional force.

11. A removable plate according to any one of claims 2 to 10 **characterised in that** the pivoting latch (6) comprises an inclined upper edge (6a) such as to cause disengagement of said latch upon sliding movement thereof on the lower edge (13a) of one of the walls (13) defining the slot (11).

12. A removable plate according to claims 2, 6 and 8 **characterised in that** the passage giving access to the pivoting locking/unlocking latch (6) comprises: a hole (7) provided in the thickness of the actual plate (2), an oblong orifice (9) in the support plate (8) of the actual plate and a hole (15) in one (13) of the walls defining the slot (11) for receiving the coupling portion (1B') of the fixed part (1).

13. A removable plate according to any one of claims 1 to 12 **characterised in that** the anchoring and articulation part (1) is made in one piece of thermoplastic elastomer, preferably of thermoplastic elastomer polyester, while the second part (2) forming the actual plate is made of polyamide.

## Patentansprüche

1. Zerlegbare Platte für einen gelenkigen Aufnahmeboden, mit dem Maschinen zum Ernten von kleinen Früchten, wie zum Beispiel Weinlesemaschinen, ausgestattet sind, die aus zwei Elementen oder verschiedenen Teilen ausgeführt ist, und zwar einem ersten Verankerungs- und Gelenkverbindungsteil (1), der eine Befestigungslasche (1A) umfasst, die dazu bestimmt ist, auf der Tragrampe (3) einer Reihe von Platten befestigt zu werden, und eine flexible Gelenkverbindungs- und Montagelasche (1B), die an der Befestigungslasche (1A) angebracht ist, und einem zweiten flachen Teil (2), der von der eigentlichen Platte gebildet wird, wobei der erste und der zweite Teil (1, 2) mit zusätzlichen Mitteln zur Schnellmontage und Schnelldemontage mittels Ineinanderschieben ausgestattet sind, **dadurch gekennzeichnet, dass** die zusätzlichen Mittel zur Schnellmontage und Schnelldemontage eine Vorrichtung zur automatischen Verriegelung in Montageposition in der Endstellung der Ineinanderschiebebewegung umfassen, und dadurch, dass sie mit einem Durchlass (7, 9, 15) ausgestattet ist, der ein Einwirken auf die Montagevorrichtung ihrer zwei Teile (1, 2) zulässt, um sie zu entriegeln, wobei dieser Durchlass von oberhalb der Platte zugänglich ist.

2. Zerlegbare Platte nach Anspruch 1, **dadurch gekennzeichnet, dass** die Mittel zur Schnellmontage und Schnelldemontage des ersten und zweiten Teils (1, 2) der Platte eine Vorrichtung zum Ineinanderschieben (1B'-10) eines der Elemente (1B') dieser Vorrichtung in das zweite Element (10) umfassen sowie einen Kippriegel (6), der mit einem (1B') der Elemente einstückig ist und mit einer Schulter bzw. einer Raste (14) zusammenwirkt, mit der das zweite Element (10) ausgestattet ist, so dass die einstückige Verbindung des ersten und zweiten Teils (1, 2) in der Endstellung des Ineinanderschiebens automatisch sichergestellt wird, wobei ein Loch (7) in der Dicke der eigentlichen Platte (2) vorgesehen ist und diese Öffnung den Zugang zum Kippriegel (6) ermöglicht, wenn sich dieser in Verriegelungsposition befindet, um dessen Kippen und das Lösen der einstückigen Verbindung der Teile (1, 2) der Platte zu erlauben.

3. Zerlegbare Platte nach Anspruch 2, **dadurch gekennzeichnet, dass** die trennbaren Montagemittel des ersten Teils (1) und des zweiten Teils (2) der Platte einen Befestigungsblock bzw. eine Einsteckverbindung (10) umfassen, die an der Unterseite des zweiten Teils (2) angeordnet ist, der aus der eigentlichen Platte gebildet wird und mit einem Schlitz (11) ausgestattet ist, der für den Eingriff eines Teils (1B') der flexiblen Gelenkverbindungslasche (1B) der ersten Teils (1) bestimmt ist.

4. Zerlegbare Platte nach Anspruch 3, **dadurch gekennzeichnet, dass** der Schlitz (11) in Bezug auf die große Achse des zweiten Teils (2), der die eigentliche Platte bildet, schräg ausgerichtet ist.

5. Zerlegbare Platte nach einem der Ansprüche 2 bis 4, **dadurch gekennzeichnet, dass** die obere Kante (17) des Montageabschnitts (1B') der flexiblen Gelenkverbindungslasche (1B) mit einer Stützplatte (8) ausgestattet ist, die senkrecht zum Montageabschnitt (1B') ausgerichtet ist, wogegen ein Schlitz (12) zwischen der Unterseite der Platte (2) und dem Befestigungsblock bzw. der Einsteckverbindung (10) für den Eingriff und die Gleitbewegung der Stützplatte (8) ausgespart ist.

6. Zerlegbare Platte nach Anspruch 5, **dadurch gekennzeichnet, dass** die Stützplatte (8) mit einer länglichen Öffnung (9) ausgestattet ist, die oberhalb und lotrecht zum aktiven Kippteil des Kippriegels (6) liegt.

7. Zerlegbare Platte nach einem der Ansprüche 5 oder 6, **dadurch gekennzeichnet, dass** das vordere Ende der Stützplatte (8) abgeschrägte Kanten (8a) aufweist.

8. Zerlegbare Platte nach einem der Ansprüche 2 bis 7, **dadurch gekennzeichnet, dass** die Vorrichtung für die automatische Verriegelung des auf dem ersten feststehenden Teil (1) austauschbaren zweiten Teils (2) einen Kippriegel (6) umfasst, der an einer der Seitenflächen des Montageabschnitts (1B') der flexiblen Gelenkverbindungslasche (1B) angebracht ist, wobei dieser Kippriegel (6) einen Schnabel (6b) aufweist, der mit einer Schulter bzw. einer Halteraste (14) zusammenwirkt, mit der die Innenkante (13a) einer der Wände (13) versehen ist, die den Schlitz (11) für die Aufnahme des Montageabschnitts (1B') der flexiblen Gelenkverbindungs- und Montagelasche (1B) begrenzen.

9. Zerlegbare Platte nach einem der Ansprüche 2 bis 8, **dadurch gekennzeichnet, dass** der Kippriegel (6) an einem Rückholmittel befestigt ist, das anstrebt, ihn nach einem Schwenken in die Gegenrichtung während des Ineinanderschiebens des ersten und zweiten Teils (1, 2) wieder in der Verriegelungsposition zu platzieren.

10. Zerlegbare Platte nach Anspruch 9, **dadurch gekennzeichnet, dass** der Kippriegel (6) in einem Stück mit dem Verankerungs- und Gelenkverbindungsteil (1) ausgebildet ist und elastisch an einer der Seitenflächen des Eingriffabschnitts (1B') der flexiblen Gelenkverbindungslasche (1B) angebracht ist, so dass ein Torsionsmoment erzeugt wird.

11. Zerlegbare Platte nach einem der Ansprüche 2 bis 10, **dadurch gekennzeichnet, dass** der Kippriegel (6) eine schräge Oberkante (6a) aufweist, so dass beim Gleiten auf der Unterkante (13a) einer der Wände (13), die den Schlitz (11) begrenzen, das Zurückziehen des Kippriegels (6) herbeigeführt wird.

12. Zerlegbare Platte nach den Ansprüchen 2, 6 und 8, **dadurch gekennzeichnet, dass** der Durchlass, der Zugriff auf den Kippriegel (6) zum Verriegeln/Entriegeln gewährt, Folgendes umfasst: ein Loch (7), das in der Dicke der eigentlichen Platte (2) ausgespart ist, eine längliche Öffnung (9), die die Stützplatte (8) der eigentlichen Platte aufweist, und ein Loch (15), das in einer der Wände (13) ausgespart ist, die den Schlitz (11) zur Aufnahme des Kopplungsabschnitts (1B') des feststehenden Teils (1) begrenzen.

13. Zerlegbare Platte nach einem der Ansprüche 1 bis 12, **dadurch gekennzeichnet, dass** der Verankerungs- und Gelenkverbindungsteil (1) aus einem Stück aus thermoplastischem Elastomer ausgeführt ist, vorzugsweise aus thermoplastischem Polyesterelastomer, während der zweite Teil (2), der die eigentliche Platte bildet, aus Polyamid ausgeführt ist.
